# EUROPEAN PATENT SPECIFICATION

(11) **EP 0 686 002 B1**
(45) Date of publication and mention of the grant of the patent: **23.04.1997**
(21) Application number: 94908342.2
(22) Date of filing: 17.02.1994
(51) Int. Cl.: A23P 1/08, A23P 1/02, A23J 3/18, A23J 3/14, A23L 1/176, A23L 1/31, A23L 1/325, A23L 1/315

(54) **CRUMB COATING COMPOSITION**
PANIERKRUMEN ÜBERZUG-ZUSAMMENSETZUNG
COMPOSITION D'ENROBAGE A BASE DE CHAPELURE

(30) Priority: 26.02.1993 EP 93301495
(43) Date of publication of application: 13.12.1995
(73) Proprietor: UNILEVER PLC, London EC4P 4BQ (GB); UNILEVER N.V., 3013 AL Rotterdam (NL)
(72) Inventor: BARNES, Douglas, James, Huntingdon, Cambridgeshire PE19 3LF (GB); FLETCHER, Brian, Charles, Bedford, Bedfordshire MK41 1JP (GB); GODDARD, Mervyn, Roy, Northamptonshire NN10 0RL (GB); MARTIN, Jamie, Carl, David, Rushden, Northamptonshire NN10 0LF (GB); MCBRIDE, Malcolm, John, Wellingborough, Northamptonshire NN9 5BA (GB); STEWART, William, John, Northamptonshire NN9 5SY (GB)
(74) Representative: Kirsch, Susan Edith
(86) International application number: EP9400470
(87) International publication number: WO9418857

(56) References cited:
- EP-A- 0 094 112
- CH-A- 650 129
- FR-A- 1 454 230
- GB-A- 2 028 341
- US-A- 4 897 275
- DATABASE WPI Section Ch, Week 8038, 1980 Derwent Publications Ltd., London, GB; Class D13, AN 80-67043C & JP,B,55 032 341 (NISSHIN OIL MILLS) 26 August 1980
- DATABASE WPI Section Ch, Week 8941, 1989 Derwent Publications Ltd., London, GB; Class D13, AN 89-296587 & JP,A,1 218 564 (AJINOMOTO) 31 August 1989
- DATABASE WPI Section Ch, Week 8627, 1986 Derwent Publications Ltd., London, GB; Class D11, AN 86-174134 & JP,A,61 108 346 (SHOWA SANGYO) 27 May 1986

## Description

### FIELD OF THE INVENTION

The invention relates to a novel food crumb coating composition which is resistant to relatively high water activities without substantial degradation of quality.

### BACKGROUND AND PRIOR ART

There is a continuing need of coated food products such as coated meat, poultry, vegetables or fish. Usually, these coated food products are obtained by first wetting a raw or at least partially cooked, optionally frozen, product, for instance by glazing or dipping into, or enrobing with, a fluid substance such as water or batter and, subsequent to wetting, applying a particulate breading material. If desired, the steps of wetting and breading can be repeated to obtain a multilayered coating. before storage, the coating may be pre-set, for instance by pre-frying.

Well known crumb coating materials contain particles of a heat-treated starchy material. Several methods for obtaining these materials have been known for a long time. One of these methods involves the baking of a loaf of bread which, after staling, is ground into conventional bread crumbs. Another method involves the cooker extrusion of a mixture of flour and water, for instance to obtain so-called Japanese crumbs.

Crumb coated products are often stored at frozen conditions. For consumption the products are heated, for instance by deep or shallow fat frying, oven baking, roasting, microwave heating or grilling. One of the factors which negatively affects the quality of crumb coatings is the absorption of moisture by the coating, which can result in soggy, disintegrated, unattractive coating layers. Relatively high environmental moisture levels often result within a short time in absorption of moisture by the crumb coating. Relatively high environmental moisture contents can occur during microwave-heating of coated products. During microwave-heating food products are thoroughly heated, thus resulting in moisture migration from the centre of the product to the crust portion. The air surrounding the product is, however, substantially not heated by the microwaves. This low temperature of the surrounding air prevents effective moisture removal from the crust, thus giving high moisture coating layers of inferior quality.

There is need of crumb coating materials which are resistant to high water activities without substantial degradation of quality. Specifically, there is need of crumb coating materials which allow the microwave heating of the coated food products with maintained quality of the coating layer, particularly after extended periods of frozen storage.

It has been found that novel coatings manufactured using agglomeration techniques are significantly improved with respect to their quality particularly after microwave heating.

### SUMMARY OF THE INVENTION

Accordingly the invention provides an agglomerated food crumb coating comprising:
(a) an insoluble powdered protein, at least 80% of which has a particle size of greater than 0.5mm; and
(b) a soluble protein or polysaccharide capable of being heat set during crumb formation.

### DEFINITION OF THE INVENTION

Agglomerated crumb coatings are particulates which, in appearance and functional behaviour, are similar to breadcrumb materials as described above.

It is essential that the powdered proteins are insoluble in water, these can be any such proteins which are of food grade.

Preferably the powdered protein is selected from vegetable proteins, such as cereal proteins, denatured proteins and mixtures thereof; preferably the powdered protein is a cereal protein particularly wheat proteins for example gluten, hordein, zein, kafirin, and avenins; more preferably the powdered protein is gluten.

It is important that the powdered protein used has a particle size such that at least 80% is greater than 0.5 mm, since particles having a diameter of less than 0.5 mm hydrate too quickly to enable processing. It is preferred that the powdered protein has a particle size of from 0.5 - 1 mm, and most preferred that the powdered protein has a particle size of from 0.5 - 0.7mm.

Soluble proteins or polysaccharides are proteins or polysaccharides capable of being solubilised in water, salt solutions and alcohol/water mixes, these can be any such proteins or polysaccharides which are of food grade and are additionally capable of being heat set.

Preferably the soluble protein is selected from albumins, globulins, gliadins, glutenins, gelatin, muscle protein and mixtures thereof. More preferably the soluble protein is selected from albumins, globulins and mixtures thereof.

Examples of suitable soluble proteins are sodium caseinate and egg albumin.

Examples of suitable soluble polysaccharides are pectin, Guar gum, Locust Bean Gum and mixtures thereof.

In order to be used within the agglomeration process described below, the soluble protein or polysaccharide is solubilised in water, salt solution or a water/alcohol solution. Preferably the solubilised protein or polysaccharide should be sprayed to form atomised droplets having a droplet size of from 0 to 100 µm, preferably 10 to 30 µm, most preferably 20 µm.

The crumb coating according to the invention preferably comprises powdered protein and soluble protein or polysaccharide at a w/w ratio of from 60:40 to 90:10.

The agglomerated crumbs will usually totally replace the bread crumb material which would normally be needed in the breading composition. If desired, it is, however, possible to use a breading system in which both conventional bread crumbs and agglomerated crumbs are present. For safeguarding quality it is, however, preferred that the weight ratio of agglomerated crumbs to conventional bread crumbs is more than 1.

Additionally the crumb coating composition may comprise starch granules. It is preferred that these starch granules have a high amylopectin content for example waxy maize starch.

Further optional ingredients in the crumb coating composition which may be included are, for example, flavouring materials, fillers, vegetable particles, sugar, fats and gassifying agents.

The final crumb will preferably have the following composition:
60 - 90% powdered protein
10 - 40% soluble protein
0 - 20% starch

### MANUFACTURE OF THE CRUMB COATING

### The Agglomeration Process

Agglomeration is a well known technique whereby ingredients are brought into contact by some form of agitation, in such a way that a stable granule is formed. There are a number of different agglomeration processes but they all have common general features. First there is a wetting/aggomeration section which is followed by an equilibrium section and finally a drying section. The wetting of the dry mix may be by steam condensation, by solvent droplets (usually water plus binder) from a fine spray and in some cases by a combination of the two. Droplet sizes must be equal to or less than the dried powder particle size. If the dry mix is wetted by a spray rather than steam, some of the soluble ingredients may be dissolved in the liquid to act as binder ie the binding material enhances bonding between the particulate matter. Alternatively, the binder can be included in the formulation as part of the dry mix.

Agitation of the dry powders is either mechanical or gaseous. The main types of agglomerating devices are rolling drums, pan granulators, all types of mixers, fluid beds and steam rewet systems. Some of these units are self contained with the wetting/agglomeration and drying all taking place in the same unit. Alternatively, some types of equipment will wet/agglomerate in one unit and drying the granules in a separate dryer. Granules may also be formed by applying pressure to the dry powder eg compaction.

### USE OF THE CRUMB COATING COMPOSITION

Crumb coating compositions according to the invention may be used to provide food products such as coated meat, poultry, vegetables or fish.

The crumb coating is preferably applied to a food substance which has first been wetted by deglazing or dipping into, or spraying with, a fluid substance such as water or batter. The coating may be pre-set, for instance by pre-frying.

Food products coated with the crumb coating according to the invention on heating for consumption have a desirable crisp crumb coating, superior to previously known crumbs. This is particularly true when the product is prepared for consumption via microwave heating.

### Examples

The invention will be further illustrated by the following examples.

### Examples 1-4 Comparative Example A

Crumbs having the formulations shown in Table 1 were prepared by agglomeration using an aeromatic machine (type MPI Bubendorf, Switzerland). A 10% w/v solution of soluble protein (casein or albumin) was added to the powdered protein (gluten) plus any additional ingredient(s) at 17-25 ml/min.

Crumb samples were sieved to a size fraction of between 2.4 to 2.8mm.

**Table 1**

| EXAMPLE | Composition % (w/w) | | | |
|---|---|---|---|---|
| | Insoluble protein (Gluten)* | Soluble protein | | Starch (Amioca) |
| | | Casein | Albumin | |
| 1 | 90 | 10 | - | - |
| 2 | 80 | 10 | - | 10 |
| 3 | 90 | - | 10 | - |
| 4 | 80 | - | 10 | 10 |

| | | | | |
|---|---|---|---|---|
| * 99.8% of the gluten had a particle size greater than 0.5mm. | | | | |

These products were then tested for moisture resistance by equilibrating in environments of different relative humidity. After equilibration the brittleness properties of the product were determined by measuring the acoustic emission using a Locan^{R} analyzer when fracturing the product and expressing this as a percentage of the acoustic emission when fracturing the freshly prepared product.

The results obtained with crumbs according to the invention were compared with results obtained with a conventional Pandora F1004 Japanese breadcrumb (Comparative Example A).

The results of these experiments are shown in Table 2.

**Table 2**

| Example | 0% RH AE Hits | 72% RH AE Hits | % retention |
|---|---|---|---|
| 1 | 88 | 31 | 35 |
| 2 | 86 | 28 | 33 |
| 3 | 173 | 94 | 54 |
| 4 | 84 | 36 | 43 |
| A | 158 | 45 | 28 |

It can clearly be seen that agglomerated crumb is significantly better than the control sample. Inclusion of starch at 10% in the agglomerated crumb improved the mouthfeel of the crumb, and still had hydration properties significantly better than the control.

### Comparative Examples B-E

Using the formulations for Examples 1-4 given above except that 100% of the gluten had a particle size less than 0.5mm, it was discovered that no agglomerated crumbs could be made when using the same agglomeration process as detailed above.

## Claims

1. An agglomerated food crumb coating comprising:
(a) an insoluble powdered protein, at least 80% of which has a particle size of greater than 0.5mm.
(b) a soluble protein or polysaccharide capable of being heat set during crumb formation.

2. A food crumb coating according to claim 1 wherein the powdered protein is selected from vegetable protein, denatured protein and mixtures thereof.

3. A food crumb coating according to claims 1 or 2 wherein the powdered protein is gluten.

4. A food crumb coating according to any preceding claim wherein the powdered protein has a particle size within the range 0.5 to 1 mm.

5. A food crumb coating according to any preceding claim wherein the soluble protein is selected from albumins, globulins, gliadins, glutenins, gelatin, muscle protein and mixtures thereof.

6. A food crumb coating according to any preceding claim wherein the soluble protein is selected from albumins, globulins and mixtures thereof.

7. A food crumb coating according to any one of claims 1 to 4 wherein the soluble polysaccharide is selected from pectin, Guar Gum, Locust Bean Gum and mixtures thereof.

8. A food crumb coating according to any preceding claim wherein the ratio of (a) to (b) is from 60:40 to 90:10.

9. A food crumb coating according to any preceding claim which additionally comprises starch granules.

10. A food crumb coating according to claim 9 wherein the starch granules have a high amylopectin content.

11. The use of a food crumb coating according to any preceding claim as a coating for food products selected from fish, vegetable, meat and poultry products.

## Patentansprüche

1. Agglomerierter Nahrungsmittel-Krumenüberzug, welcher umfaßt:
(a) ein unlösliches pulverförmiges Protein, von dem zumindest 80 % eine Teilchengröße von mehr als 0,5 mm aufweisen,
(b) ein lösliches Protein oder Polysaccharid, das während der Krumenbildung heiß fixiert werden kann.

2. Nahrungsmittel-Krumenüberzug nach Anspruch 1, worin das pulverförmige Protein ausgewählt ist aus Pflanzenprotein, denaturiertem Protein und Mischungen hievon.

3. Nahrungsmittel-Krumenüberzug nach Anspruch 1 oder 2, worin das pulverförmige Protein Gluten ist.

4. Nahrungsmittel-Krumenüberzug nach einem der vorhergehenden Ansprüche, worin das pulverförmige Protein eine Teilchengröße im Bereich von 0,5 bis 1 mm aufweist.

5. Nahrungsmittel-Krumenüberzug nach einem der vorhergehenden Ansprüche, worin das lösliche Protein ausgewählt ist aus Albuminen, Globulinen, Gliadinen, Gluteninen, Gelatine, Muskelprotein und Mischungen hievon.

6. Nahrungsmittel-Krumenüberzug nach einem der vorhergehenden Ansprüche, worin das lösliche Protein ausgewählt ist aus Albuminen, Globulinen und Mischungen hievon.

7. Nahrungsmittel-Krumenüberzug nach einem der Ansprüche 1 bis 4, worin das lösliche Polysaccharid ausgewählt ist aus Pektin, Guar-Gummi, Johannisbrot-Gummi und Mischungen hievon.

8. Nahrungsmittel-Krumenüberzug nach einem der vorhergehenden Ansprüche, worin das Verhältnis von (a) zu (b) 60:40 bis 90:10 beträgt.

9. Nahrungsmittel-Krumenüberzug nach einem der vorhergehenden Ansprüche, welcher zusätzlich Stärke-Granula umfaßt.

10. Nahrungsmittel-Krumenüberzug nach Anspruch 9, worin die Stärke-Granula einen hohen Amylopektin-Gehalt aufweisen.

11. Verwendung eines Nahrungsmittel-Krumenüberzugs nach einem der vorhergehenden Ansprüche als Überzug für Nahrungsmittelprodukte, ausgewählt aus Fisch-, Gemüse-, Fleisch- und Geflügelprodukten.

## Revendications

1. Un enrobage alimentaire à base de chapelure agglomérée comprenant les ingrédients suivants :
(a) une protéine insoluble en poudre, dont au moins 80 % présente une taille de particules supérieure à 0,5 mm.
(b) une protéine ou un polysaccharide soluble capable d'être thermoformé au cours de la formation de la chapelure.

2. Un enrobage alimentaire à base de chapelure selon la Revendication 1, dans lequel la protéine en poudre est sélectionnée parmi le groupe composé de protéine végétale, de protéine dénaturée et de mélanges de celles-ci.

3. Un enrobage alimentaire à base de chapelure selon la Revendication 1 ou 2, dans lequel la protéine en poudre est du gluten.

4. Un enrobage alimentaire à base de chapelure selon l'une quelconque des Revendications précédentes, dans lequel la protéine en poudre présente une taille de particules comprise dans la gamme allant de 0,5 à 1 mm.

5. Un enrobage alimentaire à base de chapelure selon l'une quelconque des Revendications précédentes, dans lequel la protéine soluble est sélectionnée parmi le groupe composé d'albumines, de globulines, de gliadines, de gluténines, de gélatine, de protéine musculaire et de mélanges de celles-ci.

6. Un enrobage alimentaire à base de chapelure selon l'une quelconque des Revendications précédentes, dans lequel la protéine soluble est sélectionnée parmi le groupe composé d'albumines, de globulines et de mélanges de celles-ci.

7. Un enrobage alimentaire à base de chapelure selon l'une quelconque des Revendications 1 à 4, dans lequel le polysaccharide soluble est sélectionné parmi le groupe composé de pectine, de gomme de guar, de gomme de caroube et de mélanges de celles-ci.

8. Un enrobage alimentaire à base de chapelure selon l'une quelconque des Revendications précédentes, dans lequel le rapport de masse entre (a) et (b) est compris entre 60:40 et 90:10.

9. Un enrobage alimentaire à base de chapelure selon l'une quelconque des Revendications précédentes, comprenant en outre des granulés d'amidon.

10. Un enrobage alimentaire à base de chapelure selon la Revendication 9, dans lequel les granulés d'amidon présentent une teneur élevée en amylopectine.

11. L'utilisation d'un enrobage alimentaire à base de chapelure selon l'une quelconque des Revendications précédentes en tant qu'enrobage destiné à des produits alimentaires sélectionnés parmi le groupe composé de produits de poisson, de légumes, de viande et de volaille.
